# EUROPEAN PATENT APPLICATION

(11) **EP 4 718 251 A1**
(43) Date of publication of application: **01.04.2026**
(21) Application number: 25195020.0
(22) Date of filing: 10.08.2025
(51) Int. Cl.: G06F 9/48, G06F 9/455, G06F 9/50

(54) **METHOD AND APPARATUS FOR SCHEDULING VIRTUAL MACHINE THREAD**

(30) Priority: 30.09.2024 CN 202411392218
(71) Applicant: Beijing Volcano Engine Technology Co., Ltd., Beijing 100190 (CN)
(72) Inventor: FENG, Zhimin, Beijing, 100028 (CN)
(74) Representative: Marks & Clerk LLP

(57) **Abstract**

Embodiments of the present disclosure provide a method and an apparatus for scheduling a virtual machine thread includes: determining (S201), by a load balancing scheduler, processor affinity of a first virtual central processing unit (VCPU) thread on a virtual processor of a virtual machine in response to receiving a scheduling instruction for the first VCPU thread; determining (S202), based on the processor affinity of the first VCPU thread, a second hyper-threading logical processor in the target physical processor as processor affinity of a second VCPU thread in the virtual processor; scheduling, based on the processor affinity of the first VCPU thread, the first hyper-threading logical processor to run the first VCPU thread; and scheduling (S203), based on the processor affinity of the second VCPU thread, the second hyper-threading logical processor to run the second VCPU thread. The method improves the stability of the virtual machine.

## Description

### TECHNICAL FIELD

Embodiments of the present disclosure relate to the technical field of cloud computing, and in particular, to a method and an apparatus for scheduling a virtual machine thread.

### BACKGROUND

In a cloud computing scenario, a virtual processor may be roughly classified into two categories based on a core-binding configuration of a VCPU (Virtual Central Processing Unit, virtual processor) thread in the virtual processor of a virtual machine: a dedicated instance virtual processor and an overcommitted instance virtual processor. The dedicated instance virtual processor is configured to bind a VCPU thread to a PCPU (Physical Central Processing Unit, physical processor) in a one-to-one manner, and not to bind a plurality of VCPU threads to the same PCPU at the same time. This type of instance has the highest performance.

At present, a physical processor of an X86 architecture provides hyper-threading capability, and the physical processor is divided into two HT logical cores (Hyper-Threading, hyper-threading logical processor), which can improve the throughput of the physical processor. Turning on/off hyper-threading affects the overall performance of a physical processor. Assuming that the computing performance of a physical processor is at most X after hyper-threading is turned off, the computing performance of the physical processor is at most 1.3X after hyper-threading is turned on, and two hyper-threading logical processors run tasks at the same time.

The inventors find that at least the following technical problems exist in the prior art: in a scenario where a physical processor has a hyper-threading turned on, the performance of a virtual machine is poor in stability.

### SUMMARY

Embodiments of the present disclosure provide a method and an apparatus for scheduling a virtual machine thread, which may improve the running stability of a virtual machine.

In a first aspect, an embodiment of the present disclosure provides a method for scheduling a virtual machine thread, including:
determining, by a load balancing scheduler, processor affinity of a first virtual central processing unit (VCPU) thread on a virtual processor of a virtual machine in response to receiving a scheduling instruction for the first VCPU thread, where the processor affinity of the first VCPU thread is used to configure a first hyper-threading logical processor running the first VCPU thread and a target physical processor to which the first hyper-threading logical processor belongs;
determining, based on the processor affinity of the first VCPU thread, a second hyper-threading logical processor in the target physical processor as processor affinity of a second VCPU thread in the virtual processor; and
scheduling, based on the processor affinity of the first VCPU thread, the first hyper-threading logical processor to run the first VCPU thread, and scheduling, based on the processor affinity of the second VCPU thread, the second hyper-threading logical processor to run the second VCPU thread.

In a second aspect, an embodiment of the present disclosure provides an apparatus for scheduling a virtual machine thread, including:
a receiving unit, configured to determine, by a load balancing scheduler, processor affinity of a first virtual central processing unit (VCPU) thread on a virtual processor of a virtual machine in response to receiving a scheduling instruction for the first VCPU thread, where the processor affinity of the first VCPU thread is used to configure a first hyper-threading logical processor running the first VCPU thread and a target physical processor to which the first hyper-threading logical processor belongs;
a determining unit, configured to determine, based on the processor affinity of the first VCPU thread, a second hyper-threading logical processor in the target physical processor as processor affinity of a second VCPU thread in the virtual processor; and
a scheduling unit, configured to schedule, based on the processor affinity of the first VCPU thread, the first hyper-threading logical processor to run the first VCPU thread, and to schedule, based on the processor affinity of the second VCPU thread, the second hyper-threading logical processor to run the second VCPU thread.

In a third aspect, an embodiment of the present disclosure provides an electronic device, including: a processor and a memory,
where the memory stores computer-executable instructions; and
the processor executes the computer-executable instructions stored in the memory to cause the at least one processor to execute the method for scheduling the virtual machine thread of the first aspect and various possible designs of the first aspect.

In a fourth aspect, an embodiment of the present disclosure provides a computer-readable storage medium, where the computer-readable storage medium stores computer-executable instructions which, when executed by a processor cause the processor to implement the method for scheduling the virtual machine thread according to the first aspect and various possible designs of the first aspect.

In a fifth aspect, an embodiment of the present disclosure provides a computer program product, including a computer program which, when executed by a processor cause the processer to implement the method for scheduling the virtual machine thread according to the first aspect and various possible designs of the first aspect.

According to the method and the apparatus for scheduling the virtual machine thread provided in the embodiments, the method includes: determining, by a load balancing scheduler, processor affinity of a first virtual central processing unit (VCPU) thread on a virtual processor of a virtual machine in response to receiving a scheduling instruction for the first VCPU thread, where the processor affinity of the first VCPU thread is used to configure a first hyper-threading logical processor running the first VCPU thread and a target physical processor to which the first hyper-threading logical processor belongs; determining, based on the processor affinity of the first VCPU thread, a second hyper-threading logical processor in the target physical processor; scheduling as the processor affinity of a second VCPU thread in the virtual processor; scheduling, based on the processor affinity of the first VCPU thread, the first hyper-threading logical processor to run the first VCPU thread; and scheduling, based on the processor affinity of the second VCPU thread, the second hyper-threading logical processor to run the second VCPU thread. In this technical solution, the processor affinity of the second VCPU thread in the virtual processor is determined based on the processor affinity of the first VCPU thread, ensuring that the hyper-threading logical processor running the first VCPU thread and the hyper-threading logical processor running the second VCPU thread are in a same physical processor, which solves a performance burst problem caused by two VCPU threads in a same virtual processor running on two physical processors at the same time, thereby improving the running stability of the virtual processor.

### BRIEF DESCRIPTION OF THE DRAWINGS

In order to illustrate the technical solutions in the embodiments of the present disclosure or in the prior art more clearly, the following briefly introduces the drawings required for describing the embodiments or the prior art. Obviously, the drawings in the following description show some embodiments of the present disclosure, and a person of ordinary skill in the art may derive other drawings from these drawings without creative efforts.
FIG. 1 is a first schematic diagram of a method for scheduling a virtual machine thread according to the prior art;
FIG. 2 is a first flowchart of a method for scheduling a virtual machine thread according to an embodiment of the present disclosure;
FIG. 3 is a first schematic diagram of a method for scheduling a virtual machine thread according to an embodiment of the present disclosure;
FIG. 4 is a second schematic diagram of a method for scheduling a virtual machine thread according to the prior art;
FIG. 5 is a second flowchart of a method for scheduling a virtual machine thread according to an embodiment of the present disclosure;
FIG. 6 is a second schematic diagram of a method for scheduling a virtual machine thread according to an embodiment of the present disclosure;
FIG. 7 is a schematic structural diagram of an apparatus for scheduling a virtual machine thread according to an embodiment of the present disclosure; and
FIG. 8 is a schematic structural diagram of an electronic device according to an embodiment of the present disclosure.

### DETAILED DESCRIPTION OF EMBODIMENTS

In order to make the objectives, technical solutions, and advantages of the embodiments of the present disclosure clearer, the following clearly and comprehensively describes the technical solutions in the embodiments of the present disclosure with reference to the drawings in the embodiments of the present disclosure. Apparently, the described embodiments are merely a part rather than all of the embodiments of the present disclosure. All other embodiments obtained by a person of ordinary skill in the art based on the embodiments of the present disclosure without creative efforts shall fall within the protection scope of the present disclosure.

In order to make the objectives, technical solutions, and advantages of the embodiments of the present disclosure clearer, the following clearly and comprehensively describes the technical solutions in the embodiments of the present disclosure with reference to the drawings in the embodiments of the present disclosure. Apparently, the described embodiments are merely a part rather than all of the embodiments of the present disclosure. All other embodiments obtained by a person of ordinary skill in the art based on the embodiments of the present disclosure without creative efforts shall fall within the protection scope of the present disclosure.

In a cloud computing scenario, a virtual processor may be roughly classified into two categories according to a core-binding configuration of a VCPU (Virtual Central Processing Unit, virtual processor) thread in the virtual processor of a virtual machine: a dedicated instance virtual processor and an overcommitted instance virtual processor. The dedicated instance virtual processor is configured to bind a VCPU thread to a PCPU (Physical Central Processing Unit, physical processor) in a one-to-one manner, and not to bind a plurality of VCPU threads to the same PCPU at the same time. This type of instance has the highest performance. The overcommitted instance virtual processor is configured to bind a VCPU thread to a plurality of PCPUs, and PCPUs are committed at a specific overcommitting ratio. For example, if there are 10 PCPUs on a physical processor and the overcommitting ratio is 2, 20 VCPUs will be created on the physical processor. This type of instance is low in price, but great in performance jitter.

At present, a physical processor of an X86 architecture provides hyper-threading capability, and a physical processor is divided into two HT logical cores (Hyper-Threading, hyper-threading logical processor), which can improve the throughput of the physical processor. Turning on/off hyper-threading affects the overall performance of a physical processor. Assuming that the computing performance of a physical processor is at most X after hyper-threading is turned off, the computing performance of the physical processor is at most 1.3X after hyper-threading is turned on, and two hyper-threading logical processors run tasks at the same time. The maximum computing performance of a single hyper-threading logical processor is still X, and at this time, one HT Hyper-Threading runs a task, while the other HT Hyper-Threading does not run a task.

The present application mainly solves two performance jitter problems of overcommitted instances in the cloud computing scenario. The first performance jitter problem is how to solve a performance burst problem caused by two VCPU threads in a virtual processor running on two physical processors at the same time. The second performance jitter problem is how to avoid performance interference caused by VCPU threads on different virtual processors running on the same physical processor at the same time.

The introduction to and the solution to the first performance jitter problem are as follows: in an overcommitting scenario, VCPU threads in an overcommitted instance virtual processor need to be bound with cores in a range, and therefore two VCPU threads in the same virtual processor may run on two hyper-threading logical processors of two physical processors. In this case, the computing performance of the virtual processor may be equal to the computing performance of the two physical processors.

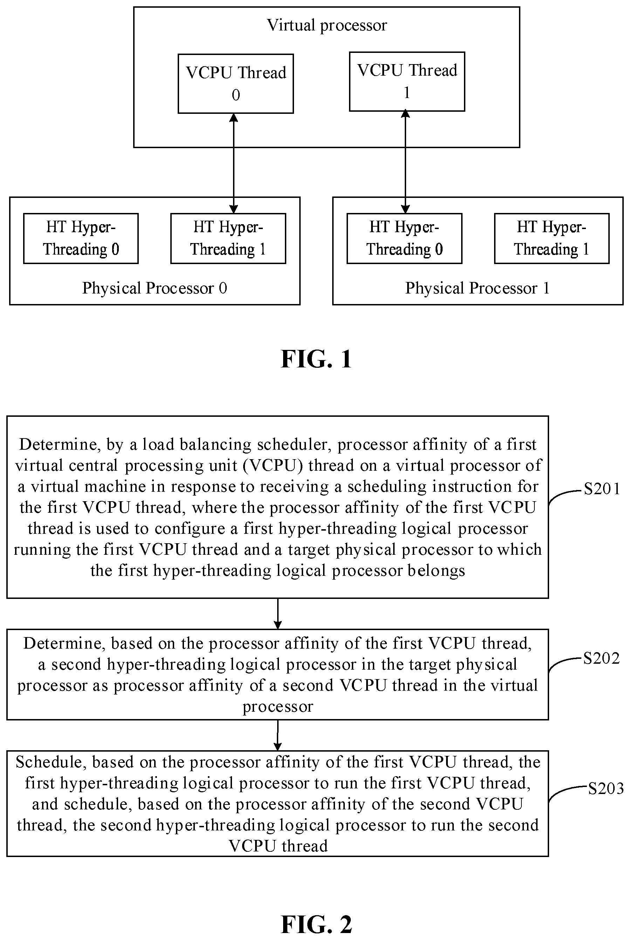

Exemplarily, as shown in FIG. 1, two VCPU threads (such as VCPU Thread 0 and VCPU Thread 1 in FIG. 1) included in the virtual processor run on two hyper-threading logical processors (such as HT Hyper-Threading 0 in the Physical Processor 0 and HT Hyper-Threading 1 in the Physical Processor 2 in FIG. 1) of two physical processors at the same time. In this case, the computing performance of the virtual processor is the sum of the performance of the two physical processors (for example, 2X). When the two VCPU threads included in the virtual processor run on two HT Hyper-Threadings of the same physical processor, the computing performance of the virtual processor is at most 1.3X. This may cause the running performance of the virtual processor to be unstable. In a dedicated scenario, two VCPU threads of each virtual processor are only bound to two hyper-threading logical processors of a single physical processor, and therefore the computing performance of the virtual processor is equal to the computing performance of the single physical processor. In this case, the performance of the overcommitted instance virtual processor that is low in price may be higher than the performance of the dedicated instance virtual processor that is high in price, which is not expected by cloud service providers.

The inventors find that at least the following technical problems exist in the prior art: in a scenario where a physical processor has hyper-threading turned on, the performance of a virtual processor is poor in stability.

In view of the technical problems in the prior art, the technical concept of the inventors is as follows: two VCPU threads of a virtual processor may be allowed to run on a same physical processor only at the same point of time. In order to ensure that the two VCPU threads in a same virtual processor run on the same physical processor, a core-binding operation may be dynamically performed on the run VCPU threads.

Correspondingly, the specific steps may include: determining, by a load balancing scheduler, processor affinity of a first virtual central processing unit (VCPU) thread on a virtual processor of a virtual machine in response to receiving a scheduling instruction for the first VCPU thread, where the processor affinity of the first VCPU thread is used to configure a first hyper-threading logical processor running the first VCPU thread and a target physical processor to which the first hyper-threading logical processor belongs; determining, based on the processor affinity of the first VCPU thread, a second hyper-threading logical processor in the target physical processor as processor affinity of a second VCPU thread in the virtual processor; scheduling, based on the processor affinity of the first VCPU thread, the first hyper-threading logical processor to run the first VCPU thread; and scheduling, based on the processor affinity of the second VCPU thread, the second hyper-threading logical processor to run the second VCPU thread.

In this technical solution, the processor affinity of the second VCPU thread in the virtual processor is determined based the processor affinity of the first VCPU thread, so that the hyper-threading logical processor running the first VCPU thread and the hyper-threading logical processor running the second VCPU thread are ensured to be in a same physical processor, and a performance burst problem caused by two VCPU threads in a same virtual processor running on two physical processors at the same time is solved, thereby improving the running stability of the virtual processor.

The following describes the specific implementation process of the method for scheduling the virtual machine thread and apparatus according to the embodiments of the present disclosure. Some of the examples are merely examples and are not intended to limit the present disclosure. An execution body of the method for scheduling the virtual machine thread according to the embodiments of the present disclosure is an electronic device, and the electronic device may be a terminal, a server, or the like.

FIG. 2 is a first flowchart of a method for scheduling a virtual machine thread according to an embodiment of the present disclosure. As shown in FIG. 2, the method for scheduling the virtual machine thread may include the following steps.

S201: Processor affinity of a first virtual central processing unit (VCPU) thread on a virtual processor of a virtual machine is determined by a load balancing scheduler, in response to a scheduling instruction for the first VCPU thread being received, where the processor affinity of the first VCPU thread is used to configure a first hyper-threading logical processor running the first VCPU thread and a target physical processor to which the first hyper-threading logical processor belongs.

In this embodiment of the present disclosure, one or more virtual processors are included in the virtual machine, and the first VCPU thread and the second VCPU thread represent two different virtual hyper-threads on the same virtual processor. One or more physical processors are included in the physical machine, and the first hyper-threading logical processor and the second hyper-threading logical processor represent two different hyper-threading logical processors on the same physical processor. The hyper-threading logical processor may also be referred to as a logical core. The physical processor may also be referred to as a physical core.

In some embodiments, the first VCPU thread is scheduled by the load balancing scheduler. Correspondingly, this step may include: determining, by the load balancing scheduler, a target physical processor with a minimum load from a plurality of candidate physical processors in response to receiving the scheduling instruction for the first VCPU thread on the virtual processor of the virtual machine; and determining the first hyper-threading logical processor in the target physical processor with the minimum load as the processor affinity of the first VCPU thread.

In this embodiment of the present disclosure, the thread number of the first VCPU thread and the thread number of the second VCPU thread have different parity. The first VCPU thread may be a VCPU thread with an even thread number, or may be a VCPU thread with an odd thread number. For example, the first VCPU thread has an even thread number, and the second VCPU thread has an odd thread number; or the first VCPU thread has an odd thread number, and the second VCPU thread has an even thread number.

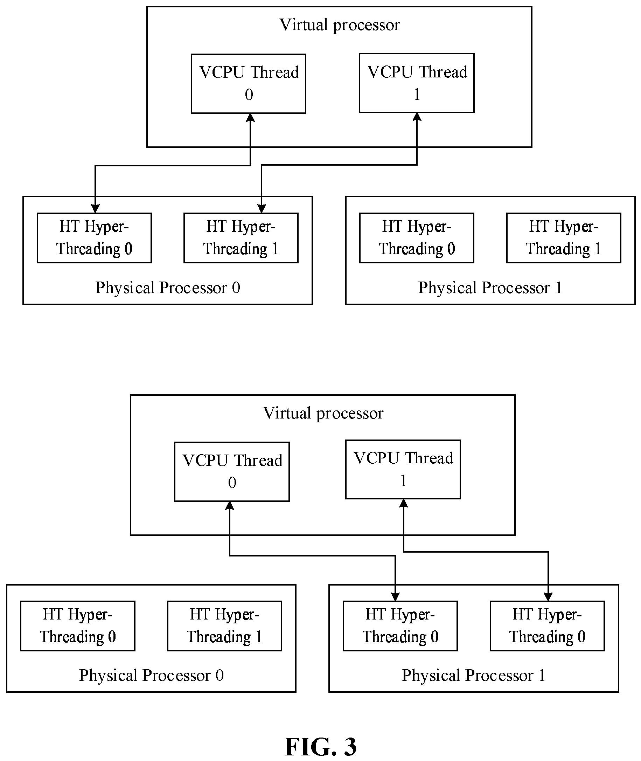

Optionally, the first VCPU thread may be a VCPU thread with an even thread number. Exemplarily, as shown in FIG. 3, the first VCPU thread is VCPU Thread 0 in the virtual processor.

S202: A second hyper-threading logical processor in the target physical processor is determined as processor affinity of a second VCPU thread in the virtual processor, based on the processor affinity of the first VCPU thread.

In this embodiment of the present disclosure, the thread number of the first VCPU thread and the thread number of the second VCPU thread have different parity.

In some embodiments, the first VCPU thread has an even thread number, and the second VCPU thread has an odd thread number. In this case, the processor affinity of the VCPU thread with the even thread number may be scheduled by the load balancing scheduler. The processor affinity of the VCPU thread with the odd thread number is adjusted with the adjustment of the processor affinity of the VCPU thread with the even thread number.

Exemplarily, as shown in FIG. 3, the first VCPU thread is VCPU Thread 0 in the virtual processor, and the thread number of the first VCPU thread is even. The second VCPU thread is VCPU Thread 1 in the virtual processor, and the thread number of the second VCPU thread is odd. The processor affinity of VCPU Thread 0 may be scheduled by the load balancing scheduler. The processor affinity of VCPU Thread 1 will be adjusted with the adjustment of the processor affinity of VCPU Thread 0.

As shown in FIG. 3, when the processor affinity of VCPU Thread 0 is HT Hyper-Threading 0 on the Physical Processor 0, the processor affinity of VCPU Thread 1 will be adjusted to HT Hyper-Threading 1 on the Physical Processor 0. When the processor affinity of VCPU Thread 0 is HT Hyper-Threading 0 on the Physical Processor 1, the processor affinity of VCPU Thread 1 will be adjusted to HT Hyper-Threading 1 on the Physical Processor 1.

In some other embodiments, the first VCPU thread has an odd thread number, and the second VCPU thread has an even thread number. In this case, the processor affinity of the VCPU thread with the odd thread number may be scheduled by the load balancing scheduler. The processor affinity of the VCPU thread with the even thread number will be adjusted with the adjustment of the processor affinity of the VCPU thread with the odd thread number.

S203: The first hyper-threading logical processor is scheduled to run the first VCPU thread based on the processor affinity of the first VCPU thread, and the second hyper-threading logical processor is scheduled to run the second VCPU thread based on the processor affinity of the second VCPU thread.

In some embodiments, before the second hyper-threading logical processor is scheduled to run the second VCPU thread based on the processor affinity of the second VCPU thread, the method further includes: determining an operating status of the second VCPU thread on the virtual processor; and if the operating status of the second VCPU thread is a running status, scheduling, based on the processor affinity of the second VCPU thread, the second hyper-threading logical processor to run the second VCPU thread.

An embodiment of the present disclosure provides a method for scheduling a virtual machine thread, including: determining, by a load balancing scheduler, processor affinity of a first virtual central processing unit (VCPU) thread on a virtual processor of a virtual machine in response to receiving a scheduling instruction for the first VCPU thread, where the processor affinity of the first VCPU thread is used to configure a first hyper-threading logical processor running the first VCPU thread and a target physical processor to which the first hyper-threading logical processor belongs; determining, based on the processor affinity of the first VCPU thread, a second hyper-threading logical processor in the target physical processor as processor affinity of a second VCPU thread in the virtual processor; scheduling, based on the processor affinity of the first VCPU thread, the first hyper-threading logical processor to run the first VCPU thread; and scheduling, based on the processor affinity of the second VCPU thread, the second hyper-threading logical processor to run the second VCPU thread. In this technical solution, the processor affinity of the second VCPU thread in the virtual processor is determined based on the processor affinity of the first VCPU thread, so that the hyper-threading logical processor running the first VCPU thread and the hyper-threading logical processor running the second VCPU thread are ensured to be in a same physical processor, and a performance burst problem caused by two VCPU threads in a same virtual processor running on two physical processors at the same time is solved, thereby improving the running stability of the virtual processor.

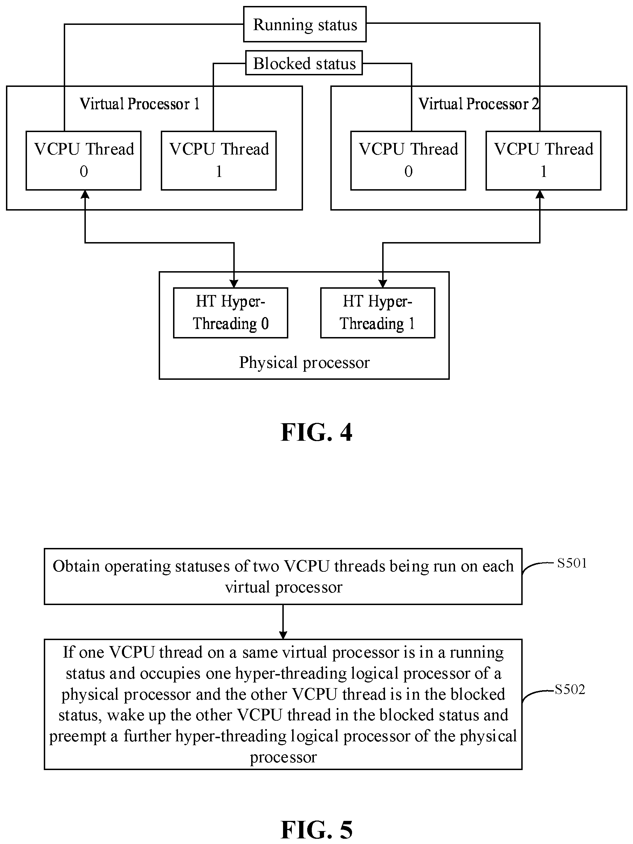

The introduction to and the solution to the second performance jitter problem are as follows: in an overcommitting scenario, performance interference between different virtual processors is as follows. Exemplarily, as shown in FIG. 4, one VCPU Thread 0 in the Virtual Processor 1 and one VCPU Thread 1 in the Virtual Processor 2 run on two hyper-threading logical processors (HT Hyper-Threading 0 and HT Hyper-Threading 1) of the same physical processor at the same time. In this case, the performance of the hyper-threading logical processor corresponding to the Virtual Processor 1 and the performance of the hyper-threading logical processor corresponding to the Virtual Processor 2 are affected, thereby affecting the running stability of the virtual processors.

The core idea of this solution is: when one VCPU thread in a virtual processor runs and the other VCPU thread does not run, the non-running VCPU thread is ensured to occupy a further hyper-threading logical processor on the same physical processor. In this way, VCPU threads being run on other virtual processors can be prevented from being scheduled to the physical processor. Correspondingly, as shown in FIG. 5, the method includes the following steps.

S501: Operating statuses of two VCPU threads being run on each virtual processor are obtained.

The operating status of a VCPU thread includes: a running status (running); a runnable status (runnable), that is, a status of waiting to be scheduled; and a blocked status (blocked).

S502: If one VCPU thread on a same virtual processor is in a running status and occupies one hyper-threading logical processor of a physical processor and the other VCPU thread is in the blocked status, the other VCPU thread in the blocked status is woken up and a further hyper-threading logical processor of the physical processor is preempted.

In this step, when one VCPU thread is being processed through a first hyper-threading logical processor on the physical processor, the other VCPU thread in the blocked status is woken up, so that VCPU threads being run on other virtual processors can be prevented from being scheduled to that physical processor.

In some embodiments, one VCPU thread on the virtual processor runs on one hyper-threading logical processor of the physical processor. Correspondingly, the step in which the other VCPU thread in the blocked status is woken up and the further hyper-threading logical processor of the physical processor is preempted includes: sending a wake-up instruction to the other VCPU thread in the blocked status to wake up the other VCPU thread in the blocked status, and allowing the woken-up VCPU thread to execute an mwait (processor wait) instruction to preempt the further hyper-threading logical processor of the physical processor, where the mwait instruction is used to enable the VCPU thread to be in a low power consumption mode.

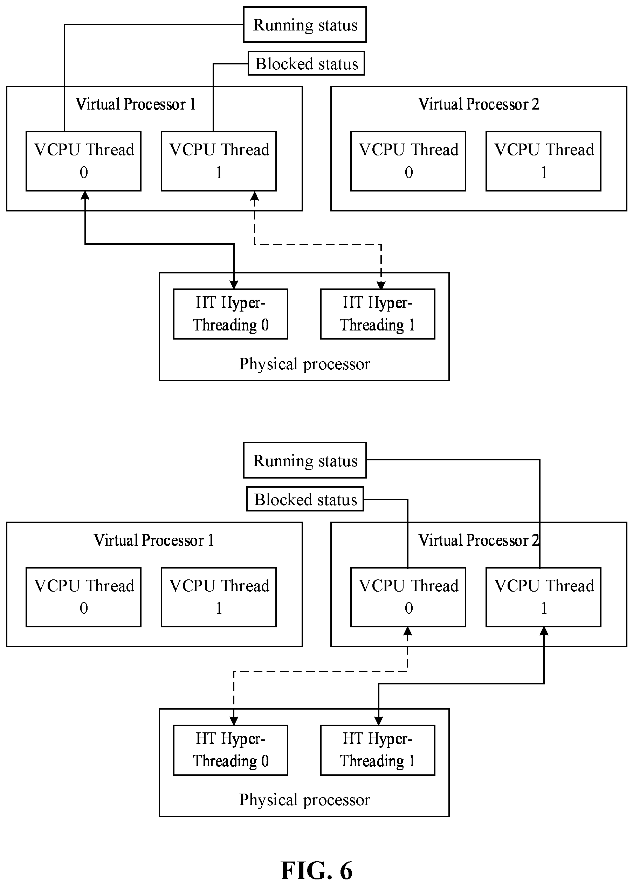

Exemplarily, as shown in FIG. 6, VCPU Thread 0 on the Virtual Processor 1 is in the running status, and VCPU Thread 1 on the Virtual Processor 1 is in the blocked status. VCPU Thread 0 on the Virtual Processor 1 runs on HT Hyper-Threading 0 of the physical processor. In this case, in order to prevent VCPU threads being run on other virtual processors from being scheduled to the physical processor, VCPU Thread 1 on the Virtual Processor 1 may be woken up to preempt a further hyper-threading logical processor (HT Hyper-Threading 1 in FIG. 6) on the same physical processor.

Exemplarily, as shown in FIG. 6, VCPU Thread 1 on the Virtual Processor 2 is in the running status, and VCPU Thread 0 on the Virtual Processor 2 is in the blocked status. VCPU Thread 1 on the Virtual Processor 2 runs on HT Hyper-Threading 1 of the physical processor. In this case, in order to prevent VCPU threads being run on other virtual processors from being scheduled to that physical processor, VCPU Thread 0 on the Virtual Processor 2 may be woken up to preempt a further hyper-threading logical processor (HT Hyper-Threading 0 in FIG. 6) on the same physical processor.

It should be noted that if the operating status of one VCPU thread on the same virtual processor is switched from the running status to the blocked status, the other VCPU thread is controlled to stop executing the mwait instruction and switch to the blocked status.

In this embodiment of the present disclosure, when one VCPU thread on the virtual processor is processed through the first hyper-threading logical processor on the physical processor, the other VCPU thread in the blocked status on the virtual processor is woken up, so that VCPU threads being run on other virtual processors may be prevented from being scheduled to the physical processor. In this case, the computing capability of the VCPU thread processed by the first hyper-threading logical processor is equal to the computing capability of the physical processor, thereby ensuring that the performance of the VCPU thread that is running is not affected.

It should be noted that the foregoing scheduling method is a method for scheduling a virtual machine thread based on a KVM (kernel-based virtual machine) side, which can not only effectively solve the performance jitter problem of a virtual machine caused by hyper-threading (abbreviated as HT) being enabled in an overcommitting scenario, but also flexibly perform hot upgrade on the virtual machine without relying on a kernel or other component versions.

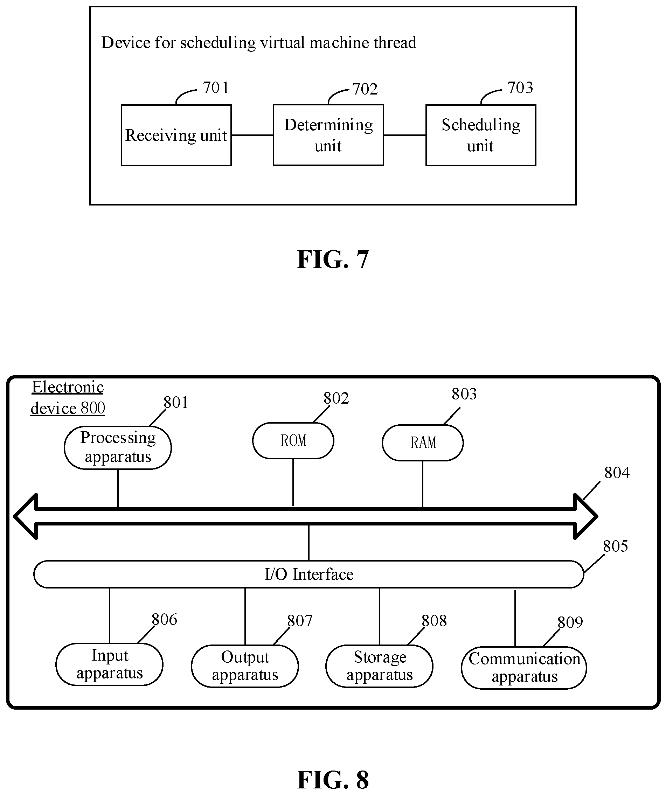

FIG. 7 is a schematic structural diagram of an apparatus for scheduling a virtual machine thread according to an embodiment of the present disclosure. As shown in FIG. 7, the virtual machine thread scheduling apparatus includes a receiving unit 701, a determining unit 702, and a scheduling unit 703.

The receiving unit 701 is configured to determine, by a load balancing scheduler, processor affinity of a first virtual central processing unit (VCPU) thread on a virtual processor of a virtual machine in response to receiving a scheduling instruction for the first VCPU thread, where the processor affinity of the first VCPU thread is used to configure a first hyper-threading logical processor running the first VCPU thread and a target physical processor to which the first hyper-threading logical processor belongs.

The determining unit 702 is configured to determine, based on the processor affinity of the first VCPU thread, a second hyper-threading logical processor in the target physical processor as processor affinity of a second VCPU thread in the virtual processor.

The scheduling unit 703 is configured to schedule, based on the processor affinity of the first VCPU thread, the first hyper-threading logical processor to run the first VCPU thread, and schedule, based on the processor affinity of the second VCPU thread, the second hyper-threading logical processor to run the second VCPU thread.

According to one or more embodiments of the present disclosure, the thread number of the first VCPU thread and the thread number of the second VCPU thread have different parity.

According to one or more embodiments of the present disclosure, the scheduling unit 703 is further configured to determine an operating status of the second VCPU thread on the virtual processor, and if the operating status of the second VCPU thread is a running status, schedule, based on the processor affinity of the second VCPU thread, the second hyper-threading logical processor to run the second VCPU thread.

According to one or more embodiments of the present disclosure, the virtual machine includes a plurality of virtual processors each running two VCPU threads. Correspondingly, the scheduling unit 703 is further configured to obtain operating statuses of the two VCPU threads being run on each virtual processor, and if one VCPU thread on the same virtual processor is in the running status and occupies one hyper-threading logical processor of a physical processor and the other VCPU thread is in a blocked status, wake up the other VCPU thread in the blocked status and preempt a further hyper-threading logical processor of the physical processor.

According to one or more embodiments of the present disclosure, the scheduling unit 703 wakes up the other VCPU thread in the blocked status and preempts a further hyper-threading logical processor of the physical processor. The step in which the scheduling unit 703 performs the operations includes: sending a wake-up instruction to the other VCPU thread in the blocked status to wake up the other VCPU thread in the blocked status, and allowing the woken-up VCPU thread to execute an mwait instruction to preempt the further hyper-threading logical processor of the physical processor, where the mwait instruction is used to enable the VCPU thread to be in a low power consumption mode.

According to one or more embodiments of the present disclosure, the scheduling unit 703 is further configured to: if the operating status of one VCPU thread on the same virtual processor is switched from the running status to the blocked status, control the other VCPU thread to stop executing the mwait instruction and switch to the blocked status.

According to one or more embodiments of the present disclosure, in the step in which the determining unit 702 determines, by the load balancing scheduler, the processor affinity of the first VCPU thread on the virtual processor of the virtual machine in response to receiving the scheduling instruction for the first VCPU thread, the determining unit 702 is further configured to: determine, by the load balancing scheduler, a target physical processor with a minimum load from a plurality of candidate physical processors in response to receiving the scheduling instruction for the first VCPU thread on the virtual processor of the virtual machine; and determine a first hyper-threading logical processor in the target physical processor with the minimum load as the processor affinity of the first VCPU thread.

Referring to FIG. 8, FIG. 8 is a schematic structural diagram of an electronic device 800 according to an embodiment of the present disclosure. The electronic device 800 may be a terminal device or a server. The terminal device may include, but is not limited to, a mobile terminal such as a mobile phone, a laptop, a digital broadcast receiver, a personal digital assistant (abbreviated as PDA), a tablet computer, a portable media player (abbreviated as PMP), and a vehicle-mounted terminal (such as a vehicle navigation terminal), and a fixed terminal such as a digital TV and a desktop computer. The electronic device shown in FIG. 8 is merely an example, and should not impose any limitation on the function and range of use of the embodiments of the present disclosure.

As shown in FIG. 8, the electronic device 800 may include a processing apparatus 801 (such as a central processing unit and a graphics processing unit). The processing apparatus 801 may perform various appropriate actions and processing according to a program stored in a read-only memory (abbreviated as ROM) 802 or a program loaded from a storage apparatus 808 into a random-access memory (abbreviated as RAM) 803. The RAM 803 further stores various programs and data required for the operation of the electronic device 800. The processing apparatus 801, the ROM 802, and the RAM 803 are connected to each other through a bus 804. An input/output (I/O) interface 805 is also connected to the bus 804.

Generally, the following apparatuses may be connected to the I/O interface 805: an input apparatus 806 such as a touchscreen, a touchpad, a keyboard, a mouse, a camera, a microphone, an accelerometer, and a gyroscope; an output apparatus 807 such as a liquid crystal display (abbreviated as LCD), a speaker, and a vibrator; a storage apparatus 808 such as a magnetic tape and a hard disk; and a communication apparatus 809. The communication apparatus 809 may allow the electronic device 800 to perform wireless or wired communication with other devices to exchange data. Although FIG. 8 shows the electronic device 800 having various apparatuses, it should be understood that it is not required to implement or have all of the illustrated apparatuses. Alternatively, more or fewer apparatuses may be implemented or provided.

In particular, based on the embodiments of the present disclosure, the process described above with reference to the flowchart may be implemented as a computer software program. For example, an embodiment of the present disclosure includes a computer program product, which includes a computer program carried on a computer-readable medium, and the computer program includes program code for executing the method shown in the flowchart. In such an embodiment, the computer program may be downloaded and installed from a network through the communication apparatus 809, or may be installed from the storage apparatus 808, or may be installed from the ROM 802. When the computer program is executed by the processing apparatus 801, the above functions defined in the method of the embodiments of the present disclosure are performed.

It should be noted that the preceding computer-readable medium in the present disclosure may be a computer-readable signal medium or a computer-readable storage medium or any combination thereof. The computer-readable storage medium may be, for example, but not limited to, an electrical, magnetic, optical, electromagnetic, infrared, or semiconductor system, apparatus, or device or a combination thereof. More specific examples of the computer-readable storage medium may include, but are not limited to, an electrical connection having one or more wires, a portable computer magnetic disk, a hard disk, a random-access memory (RAM), a read-only memory (ROM), an erasable programmable read-only memory (EPROM or flash memory), an optical fiber, a portable compact disc read-only memory (CD-ROM), an optical storage device, a magnetic storage device, or any appropriate combination thereof. In the present disclosure, the computer-readable storage medium may be any tangible medium including or storing a program. The program may be used by or used in conjunction with an instruction execution system, apparatus, or device. In the present disclosure, the computer-readable signal medium may include a data signal propagated in baseband or as part of a carrier wave, and computer-readable program code is carried in the data signal. The data signal propagated in this manner may be in various forms and includes, but is not limited to, an electromagnetic signal, an optical signal, or any appropriate combination thereof. The computer-readable signal medium may also be any computer-readable medium other than the computer-readable storage medium. The computer-readable signal medium may send, propagate, or transmit a program used by or used in conjunction with an instruction execution system, apparatus, or device. The program code included on the computer-readable medium may be transmitted using any appropriate medium, including, but not limited to, a wire, an optical cable, radio frequency (RF), or any appropriate combination thereof.

The preceding computer-readable medium may be included in the preceding electronic device, or may exist alone without being assembled into the electronic device.

The preceding computer-readable medium carries one or more programs, and when the one or more programs are executed by the electronic device, the electronic device is enabled to execute the method described in the preceding embodiments.

The computer program code for performing the operations of the present disclosure may be written in one or more programming languages or a combination thereof. The preceding programming languages include object-oriented programming languages such as Java, Smalltalk, and C++, as well as conventional procedural programming languages such as C or similar programming languages. The program code may be executed entirely on the user's computer, executed partly on the user's computer, executed as a stand-alone software package, executed partly on the user's computer and partly on a remote computer, or executed entirely on the remote computer or server. In the scenario involving the remote computer, the remote computer may be connected to the user's computer through any type of network, including a local area network (abbreviated as LAN) or a wide area network (abbreviated as WAN), or the connection may be made to an external computer (for example, through the Internet using an Internet service provider).

The flowcharts and block diagrams in the drawings illustrate the architecture, functionality, and operation of possible implementations of systems, methods, and computer program products according to various embodiments of the present disclosure. In this regard, each block in the flowcharts or block diagrams may represent a module, a program segment, or a part of codes, and the module, the program segment, or the part of codes includes one or more executable instructions for implementing specified logical functions. It should also be noted that, in some alternative implementations, the functions indicated in the blocks may occur in an order different from those indicated in the drawings. For example, two blocks shown in succession may, in fact, be executed substantially concurrently, or the two blocks may sometimes be executed in a reverse order, depending on the functions involved. It should also be noted that, each block in the block diagrams and/or flowcharts and a combination of blocks in the block diagrams and/or flowcharts may be implemented by a dedicated hardware-based system that performs the specified functions or operations, or may also be implemented by a combination of dedicated hardware and computer instructions.

The units involved in the embodiments of the present disclosure may be implemented in software or hardware. The name of a unit does not constitute a limitation on the unit itself under certain circumstances. For example, a first acquisition unit may also be described as "a unit for acquiring at least two Internet protocol addresses".

The functions described herein above may be performed, at least partially, by one or more hardware logic components. For example, without limitation, available exemplary types of hardware logic components include: a field programmable gate array (FPGA), an application specific integrated circuit (ASIC), an application specific standard product (ASSP), a system on chip (SOC), a complex programmable logical device (CPLD), etc.

In a first aspect, based on one or more embodiments of the present disclosure, there is provided a method for scheduling a virtual machine thread, including:
determining, by a load balancing scheduler, processor affinity of a first virtual central processing unit (VCPU) thread on a virtual processor of a virtual machine in response to receiving a scheduling instruction for the first VCPU thread, where the processor affinity of the first VCPU thread is used to configure a first hyper-threading logical processor running the first VCPU thread and a target physical processor to which the first hyper-threading logical processor belongs;
determining, based on the processor affinity of the first VCPU thread, a second hyper-threading logical processor in the target physical processor as processor affinity of a second VCPU thread in the virtual processor; and
scheduling, based on the processor affinity of the first VCPU thread, the first hyper-threading logical processor to run the first VCPU thread, and scheduling, based on the processor affinity of the second VCPU thread, the second hyper-threading logical processor to run the second VCPU thread.

According to one or more embodiments of the present disclosure, the thread number of the first VCPU thread and the thread number of the second VCPU thread have different parity.

According to one or more embodiments of the present disclosure, before the second hyper-threading logical processor is scheduled to run the second VCPU thread based on the processor affinity of the second VCPU thread, the method further includes: determining an operating status of the second VCPU thread on the virtual processor; and if the operating status of the second VCPU thread is a running status, scheduling, based on the processor affinity of the second VCPU thread, the second hyper-threading logical processor to run the second VCPU thread.

According to one or more embodiments of the present disclosure, the virtual machine includes a plurality of virtual processors each running two VCPU threads. Correspondingly, the method further includes: obtaining operating statuses of the two VCPU threads being run on each virtual processor; and if one VCPU thread on the same virtual processor is in the running status and occupies one hyper-threading logical processor of a physical processor and the other VCPU thread is in a blocked status, waking up the other VCPU thread in the blocked status and preempting a further hyper-threading logical processor of the physical processor.

According to one or more embodiments of the present disclosure, waking up the other VCPU thread in the blocked status and preempting the further hyper-threading logical processor of the physical processor includes: sending a wake-up instruction to the other VCPU thread in the blocked status to wake up the other VCPU thread in the blocked status, and allowing the woken-up VCPU thread to execute an mwait instruction to preempt the further hyper-threading logical processor of the physical processor, where the mwait instruction is used to enable the VCPU thread to be in a low power consumption mode.

According to one or more embodiments of the present disclosure, the method further includes: if the operating status of one VCPU thread on the same virtual processor is switched from the running status to the blocked status, controlling the other VCPU thread to stop executing the mwait instruction and switch to the blocked status.

According to one or more embodiments of the present disclosure, determining, by the load balancing scheduler, the processor affinity of the first VCPU thread on the virtual processor of the virtual machine in response to receiving the scheduling instruction for the first VCPU thread includes: determining, by the load balancing scheduler, a target physical processor with a minimum load from a plurality of candidate physical processors in response to receiving the scheduling instruction for the first VCPU thread on the virtual processor of the virtual machine; and determining a first hyper-threading logical processor in the target physical processor with the minimum load as the processor affinity of the first VCPU thread.

In a second aspect, based on one or more embodiments of the present disclosure, there is provided an apparatus for scheduling a virtual machine thread, including:
a receiving unit, configured to determine, by a load balancing scheduler, processor affinity of a first virtual central processing unit (VCPU) thread on a virtual processor of a virtual machine in response to receiving a scheduling instruction for the first VCPU thread, where the processor affinity of the first VCPU thread is used to configure a first hyper-threading logical processor running the first VCPU thread and a target physical processor to which the first hyper-threading logical processor belongs;
a determining unit, configured to determine, based on the processor affinity of the first VCPU thread, a second hyper-threading logical processor in the target physical processor as processor affinity of a second VCPU thread in the virtual processor; and
a scheduling unit, configured to schedule, based on the processor affinity of the first VCPU thread, the first hyper-threading logical processor to run the first VCPU thread, and schedule, based on the processor affinity of the second VCPU thread, the second hyper-threading logical processor to run the second VCPU thread.

According to one or more embodiments of the present disclosure, the thread number of the first VCPU thread and the thread number of the second VCPU thread have different parity.

According to one or more embodiments of the present disclosure, the scheduling unit is further configured to determine an operating status of the second VCPU thread on the virtual processor, and if the operating status of the second VCPU thread is a running status, schedule, based on the processor affinity of the second VCPU thread, the second hyper-threading logical processor to run the second VCPU thread.

According to one or more embodiments of the present disclosure, the virtual machine includes a plurality of virtual processors each running two VCPU threads. Correspondingly, the scheduling unit is further configured to obtain operating statuses of the two VCPU threads being run on each virtual processor, and if one VCPU thread on the same virtual processor is in the running status and occupies one hyper-threading logical processor of a physical processor and the other VCPU thread is in a blocked status, wake up the other VCPU thread in the blocked status and preempt a further hyper-threading logical processor of the physical processor.

According to one or more embodiments of the present disclosure, the scheduling unit wakes up the other VCPU thread in the blocked status and preempts the further hyper-threading logical processor of the physical processor. The step in which the scheduling unit performs the operations includes: sending a wake-up instruction to the other VCPU thread in the blocked status to wake up the other VCPU thread in the blocked status, and allowing the woken-up VCPU thread to execute an mwait instruction to preempt the further hyper-threading logical processor of the physical processor, where the mwait instruction is used to enable the VCPU thread to be in a low power consumption mode.

According to one or more embodiments of the present disclosure, the scheduling unit is further configured to: if the operating status of one VCPU thread on the same virtual processor is switched from the running status to the blocked status, control the other VCPU thread to stop executing the mwait instruction and switch to the blocked status.

According to one or more embodiments of the present disclosure, in the step in which the determining unit determines, by the load balancing scheduler, the processor affinity of the first VCPU thread on the virtual processor of the virtual machine in response to receiving the scheduling instruction for the first VCPU thread, the determining unit is further configured to: determine, by the load balancing scheduler, a target physical processor with a minimum load from a plurality of candidate physical processors in response to receiving the scheduling instruction for the first VCPU thread on the virtual processor of the virtual machine; and determine a first hyper-threading logical processor in the target physical processor with the minimum load as the processor affinity of the first VCPU thread.

In a third aspect, according to one or more embodiments of the present disclosure, there is provided an electronic device, including: at least one processor and a memory,
where the memory stores a computer-executable instruction; and
the at least one processor executes the computer-executable instruction stored in the memory to cause the at least one processor to execute the method for scheduling the virtual machine thread according to the first aspect and various possible designs of the first aspect.

In a fourth aspect, according to one or more embodiments of the present disclosure, there is provided a computer-readable storage medium, where the computer-readable storage medium stores a computer-executable instruction, and when a processor executes the computer-executable instruction, the method for scheduling the virtual machine thread according to the first aspect and various possible designs of the first aspect is implemented.

In a fifth aspect, according to one or more embodiments of the present disclosure, there is provided a computer program product, including a computer program, where when the computer program is executed by a processor, the method for scheduling the virtual machine thread according to the first aspect and various possible designs of the first aspect is implemented.

The preceding description is merely a description of preferred embodiments of the present disclosure and the applied technical principles. Those skilled in the art should understand that the scope of disclosure involved in the present disclosure is not limited to the technical solutions formed by the specific combination of the preceding technical features, and should also cover, without departing from the preceding disclosed concept, other technical solutions formed by any combination of the preceding technical features or equivalent features thereof. For example, a technical solution formed by replacing the preceding features with the technical features with similar functions disclosed in the present disclosure (but not limited to).

In addition, although operations are depicted in a particular order, it should not be understood that these operations are required to be performed in the specific order shown or in a sequential order. Under certain circumstances, multitasking and parallel processing may be advantageous. Likewise, although the preceding discussion includes several specific implementation details, these should not be construed as limitations on the scope of the present disclosure. Certain features that are described in the context of separate embodiments may also be implemented in combination in a single embodiment. Conversely, various features that are described in the context of a single embodiment may also be implemented in multiple embodiments individually or in any suitable sub-combination.

Although the subject matter has been described in language specific to structural features and/or logical actions of the method, it should be understood that the subject matter defined in the appended claims is not necessarily limited to the specific features or actions described above. Rather, the specific features and actions described above are merely exemplary forms for implementing the claims.

## Claims

1. A method for scheduling a virtual machine thread, comprising:
determining (S201), by a load balancing scheduler, processor affinity of a first virtual central processing unit (VCPU) thread on a virtual processor of a virtual machine in response to receiving a scheduling instruction for the first VCPU thread, wherein the processor affinity of the first VCPU thread is used to configure a first hyper-threading logical processor running the first VCPU thread and a target physical processor to which the first hyper-threading logical processor belongs;
determining (S202), based on the processor affinity of the first VCPU thread, a second hyper-threading logical processor in the target physical processor as processor affinity of a second VCPU thread in the virtual processor; and
scheduling (S203), based on the processor affinity of the first VCPU thread, the first hyper-threading logical processor to run the first VCPU thread, and scheduling, based on the processor affinity of the second VCPU thread, the second hyper-threading logical processor to run the second VCPU thread.

2. The method of claim 1, wherein a thread number of the first VCPU thread and a thread number of the second VCPU thread have different parity.

3. The method of claim 1, wherein, before scheduling, based on the processor affinity of the second VCPU thread, the second hyper-threading logical processor to run the second VCPU thread, the method further comprises:
determining an operating status of the second VCPU thread on the virtual processor; and
in response to the operating status of the second VCPU thread being a running status, scheduling, based on the processor affinity of the second VCPU thread, the second hyper-threading logical processor to run the second VCPU thread.

4. The method of claim 1, wherein the virtual machine comprises a plurality of virtual processors each running two VCPU threads; and correspondingly, the method further comprises:
obtaining (S501) operating statuses of the two VCPU threads being run on each virtual processor; and
in response that one VCPU thread on a same virtual processor is in a running status and occupies one hyper-threading logical processor of the physical processor and the other VCPU thread on the same virtual processor is in a blocked status, waking up (S502) the other VCPU thread in the blocked status and preempting a further hyper-threading logical processor of the physical processor.

5. The method of claim 4, wherein waking up the other VCPU thread in the blocked status and preempting the further hyper-threading logical processor of the physical processor comprises:
sending a wake-up instruction to the other VCPU thread in the blocked status to wake up the other VCPU thread in the blocked status, and enabling the woken-up VCPU thread to execute a processor wait (mwait) instruction to preempt the further hyper-threading logical processor of the physical processor, wherein the mwait instruction is used to enable the VCPU thread to be in a low power consumption mode.

6. The method of claim 4, further comprising:
controlling the other VCPU thread to stop executing the mwait instruction and switch to the blocked status in response that the operating status of the one VCPU thread on the same virtual processor is switched from the running status to the blocked status.

7. The method of any of claims 1 to 6, wherein determining, by the load balancing scheduler, processor affinity of the first VCPU thread on the virtual processor of the virtual machine in response to receiving the scheduling instruction for the first VCPU thread comprises:
determining, by the load balancing scheduler, a target physical processor with a minimum load from a plurality of candidate physical processors in response to receiving the scheduling instruction for the first VCPU thread on the virtual processor of the virtual machine; and
determining the first hyper-threading logical processor in the target physical processor with the minimum load as the processor affinity of the first VCPU thread.

8. An apparatus for scheduling a virtual machine thread, comprising:
a receiving unit (701), configured to determine, by a load balancing scheduler, processor affinity of a first virtual central processing unit (VCPU) thread on a virtual processor of a virtual machine in response to receiving a scheduling instruction for the first VCPU thread, wherein the processor affinity of the first VCPU thread is used to configure a first hyper-threading logical processor running the first VCPU thread and a target physical processor to which the first hyper-threading logical processor belongs;
a determining unit (702), configured to determine, based on the processor affinity of the first VCPU thread, a second hyper-threading logical processor in the target physical processor as processor affinity of a second VCPU thread in the virtual processor; and
a scheduling unit (703), configured to schedule, based on the processor affinity of the first VCPU thread, the first hyper-threading logical processor to run the first VCPU thread, and schedule, based on the processor affinity of the second VCPU thread, the second hyper-threading logical processor to run the second VCPU thread.

9. An electronic device, comprising:
a processor, and
a memory, wherein the memory stores computer-executable instructions; and
the processor executes the computer-executable instructions stored in the memory to cause the processor to execute the method for scheduling the virtual machine thread of any of claims 1 to 7.

10. A computer-readable storage medium, storing computer-executable instructions which, when executed by a processor, cause the processor to implement the method for scheduling the virtual machine thread of any of claims 1 to 7.

11. A computer program product, comprising a computer program which, when executed by a processor, causes the processor to implement the method for scheduling the virtual machine thread according to any of claims 1 to 7.
